# EUROPÄISCHE PATENTSCHRIFT

(11) **EP 3 268 156 B1**
(45) Veröffentlichungstag und Bekanntmachung des Hinweises auf die Patenterteilung: **28.10.2020**
(21) Anmeldenummer: 16704853.7
(22) Anmeldetag: 18.02.2016
(51) Int. Cl.: B23B 31/177

(54) **AUSGLEICHSSPANNFUTTER ZUM ZENTRISCHEN EINSPANNEN VON WERKSTÜCKEN**
COMPENSATING CHUCK FOR CENTRALLY CLAMPING WORKPIECES
MANDRIN À COMPENSATION POUR LE SERRAGE CENTRÉ DE PIÈCES

(30) Priorität: 12.03.2015 DE 102015204502
(43) Veröffentlichungstag der Anmeldung: 17.01.2018
(73) Patentinhaber: HVM Technology GmbH, 28876 Oyten (DE)
(72) Erfinder: HENKE, Volker, 28876 Oyten (DE)
(74) Vertreter: Eisenführ Speiser
(86) Internationale Anmeldenummer: PCT/EP2016/053416
(87) Internationale Veröffentlichungsnummer: WO 2016/142142

(56) Entgegenhaltungen:
- EP-A1- 0 400 533
- WO-A1-80/00427
- WO-A1-2011/137884
- DE-A1- 4 016 527
- US-A- 2 921 796

## Beschreibung

Die vorliegende Erfindung betrifft ein Ausgleichsspannfutter zum zentrischen Einspannen von Werkstücken nach dem Oberbegriff von Anspruch 1. Insbesondere betrifft die Erfindung ein Ausgleichsspannfutter mit einem Gehäuse, zwei Paaren von einander diametral gegenüberliegenden Grundbacken zur Aufnahme korrespondierender Spannbacken, einer, vorzugsweise mittels Kraftspannung bewegbaren Antriebseinheit mit zwei Paaren von antreibbaren Mitnehmern, wobei zwei benachbarte Mitnehmer mittels einer ersten Wippe miteinander gekoppelt sind, und die zwei weiteren benachbarten Mitnehmer mittels einer zweiten Wippe miteinander gekoppelt sind.

Unter einem Ausgleichspannfutter wird ein Spannfutter verstanden, welches durch eine Ungleichbewegung seiner Spannbacken auch Werkstücke einzuspannen vermag, die nicht perfekt zylindrisch bzw. symmetrisch sind, sondern von einer streng symmetrischen Form abweichen. Es sind aus dem Stand der Technik beispielsweise Dreibackenfutter oder Sechsbackenfutter bekannt, die über Pendelbrücken und ähnlichen Mechanismen einen begrenzten Ausgleich zwischen den Spannbacken schaffen können. Grundsätzlich ist zu beobachten, dass jedes Werkstück durch das Einspannen in einem Spannfutter elastisch verformt wird.

Die elastische Verformung sorgt dafür, dass ein im eingespannten Zustand spanend bearbeitetes Werkstück nach dem Ausspannen aus dem Spannfutter in seiner Form aufgrund der elastischen Rückverformung nicht mehr exakt dem Zustand entspricht, den es während des eingespannten Zustandes hatte.

Diese Verformung ist umso stärker ausgeprägt, je weniger Spannbacken zum Einspannen verwendet werden. Aus diesem Grund werden Vierbacken-Spannfutter, um die es in der vorliegenden Erfindung geht, als vorteilhaft gegenüber Dreibackenfuttern angesehen, weil sie eine gleichmäßigere Verspannung des Werkstücks ermöglichen. Das zentrische Einspannen von Werkstücken ist bei Vierbacken-Spannfuttern aufgrund der statischen Überbestimmung mit vier Backen ein zentraler Aspekt, der bei der Konstruktion zu berücksichtigen ist. Um eine ausreichend hohe Wiederholgenauigkeit und Zuverlässigkeit beim Spannen zu gewährleisten, ist es von wesentlicher Bedeutung, dass das Spannfutter die Werkstücke immer mit Bezug auf den gleichen Mittelpunkt - und somit zentrisch - einspannt. Es bestehen verschiedene Ansätze, die Zentrizität herzustellen. Beispielsweise ist aus der Veröffentlichung DE 10 2013 201 231 B3 ein Ausgleichsspannfutter bekannt, welches eine zentrische Einspannung mittels eines leitend gelagerten Antriebsschlittens gewährleistet.

Aus der Veröffentlichung WO 2011/137884 A1 ist beispielsweise ein Ausgleichsspannfutter nach dem Oberbegriff von Anspruch 1 bekannt. Das Ausgleichsspannfutter der vorstehend und eingangs bezeichneten Art versucht die Zentrizität des Spannvorgangs mittels eines Koppelschwingenantriebs zu gewährleisten. Dieser Lösungsansatz wird aufgrund seiner Komplexität als störanfällig nachteilig angesehen. Zudem sorgen ungünstige Hebelverhältnisse für Beeinträchtigungen des Wirkungsgrades der Kraftübertragung.

Der Erfindung lag somit die Aufgabe zugrunde, ein Ausgleichsspannfutter der eingangs bezeichneten Art dahingehend zu verbessern, dass die Zentrizität beim Einspannen bei möglichst vermindertem Montageaufwand des Spannfutters verbessert wird.

Die Erfindung löst die ihr zugrunde liegende Aufgabe bei einem Ausgleichsspannfutter der eingangs bezeichneten Art mit den Merkmalen von Anspruch 1. Insbesondere schlägt die Erfindung vor, dass das Ausgleichsspannfutter einen Koppelring aufweist, der einen ersten Mitnehmer und einen diametral gegenüberliegenden zweiten Mitnehmer in Umfangsrichtung tangential bezogen auf die Spannachse führt, wobei in radialer Richtung ein Bewegungsspiel zwischen den Mitnehmern und dem Koppelring ausgebildet ist. Die Erfindung macht sich die Erkenntnis zunutze, dass zum Wahren der Zentrizität in erster Linie das Synchronisieren der Schwenkbewegung der ersten und zweiten Wippe beiträgt. Diese rein rotatorische Synchronisierungsaufgabe wird mittels des erfindungsgemäßen Kopplungsrings von einer radialen Führung der Mitnehmer isoliert, so dass jene Führung durch andere Teile gewährleistet werden kann, während sich der erfindungsgemäße Koppelring ausschließlich um das Führen der Wippen (mittels der diametral gegenüberliegenden Mitnehmer) in Drehrichtung kümmert. Dadurch, dass in radialer Richtung bezogen auf die Spannachse des Koppelrings ein Bewegungsspiel zwischen den Mitnehmern und dem Koppelring ausgebildet ist, wird das Auftreten statischer Überbestimmungen zumindest eingeschränkt, und die Montage wird aufgrund reduzierter Bauteilkomplexität deutlich erleichtert.

Die Erfindung wird dadurch vorteilhaft weitergebildet, dass der Koppelring um die Spannachse herum drehbar in dem Gehäuse angeordnet ist. Vorzugsweise weist der Koppelring einen ersten, vorzugsweise radial ausgerichteten Steg auf, der in eine Ausnehmung des ersten Mitnehmers eingreift, sowie einen zweiten, vorzugsweise radial ausgerichteten Steg, der in eine Ausnehmung des zweiten Mitnehmers eingreift. Die Ausnehmung in dem jeweiligen Mitnehmer ist vorzugsweise als Tasche ausgebildet, innerhalb derer der Mitnehmer in radialer Richtung möglichst spielarm oder spielfrei gleiten kann. Vorzugsweise weist die Ausnehmung einen zur Öffnung hin insbesondere (radial nach innen) größer werdenden Querschnitt auf, der ein Verschwenken im Winkel zwischen Mitnehmer und Steg des Koppelrings ermöglicht. Durch diese aufgeweitete Ausnehmung wird ein Verkanten zwischen Mitnehmer und Koppelring wirksam vermieden.

In einer weiteren bevorzugten Ausgestaltung weist der Koppelring eine zumindest im Wesentlichen zentrale Durchgangsöffnung auf. Durch die zentrale Durchgangsöffnung ist der Anmelder in der Lage, Material durch das Futter hindurchzuführen.

Die erste und die zweite Wippe des Ausgleichsspannfutters sind in einer weiteren bevorzugten Ausgestaltung drehbar auf jeweils einem Schieber angeordnet. Vorzugsweise sind die Schieber jeweils mit einem Kolben bzw. einer Zugführung gekoppelt und synchron, insbesondere radial, aufeinander zu bzw. voneinander weg bewegbar. Mittels der Zugführung wird eine Zwangssynchronisation der Schieber in der Spannbewegung erreicht. Bei einer Spannbewegung ohne Kontakt zum Werkstück oder anderen Hindernissen wird in dieser Ausgestaltung die Wippe nicht verschwenkt, was zu einer gleichmäßigen Bewegung aller Mitnehmer und somit aller Spannbacken führt. Erst beim Auftreffen auf ein erstes Hindernis wie beispielsweise das Werkstück wird durch eine Schwenkbewegung der Wippe relativ zum Schieber der eine ihrer zugeordneten Mitnehmer mit anderen Bewegungsanteilen bewegt als der andere an ihr angeordnete Mitnehmer, was eine Ungleichbewegung der Spannbacken zur Folge hat. Mittels des Koppelrings wird eine synchrone Gegenbewegung der jeweils diametral gegenüberliegenden Mitnehmer auf der anderen Wippe bewirkt. Hierdurch bleibt zu jedem Zeitpunkt bei Ausgleichsbewegungen oder bei einer nicht ausgleichenden Spannbewegung des Spannfutters die Zentrizität bezogen auf die Spannachse gewahrt.

Die erste und zweite Wippe sind vorzugsweise jeweils um eine zur Spannachse parallele Drehachse schwenkbar.

Die Mitnehmer sind jeweils vorzugsweise linear beweglich in dem Gehäuse geführt.

In einer bevorzugten Ausführungsform sind jeweils einander diametral gegenüberliegende Mitnehmer zueinander parallel geführt, während weiter vorzugsweise jeweils benachbart angeordnete Mitnehmer rechtwinklig zueinander geführt sind. Die Ausgestaltung der gegenüberliegend parallel geführten Mitnehmer in Kombination mit den benachbart rechtwinklig zueinander ausgerichteten Mitnehmerführungen sorgt für eine günstige Kinematik des Spannfutters bei gleichzeitig minimiertem Bauraum.

In einer bevorzugten Ausführungsform sind die Mitnehmer auf der ihr jeweils zugeordneten Wippe jeweils mittels eines Läufers gekoppelt, welcher drehbar auf der Wippe gelagert ist. Der jeweilige Läufer ist vorzugsweise relativ zu dem ihm zugeordneten Mitnehmer linear geführt beweglich. In einer besonders bevorzugten Ausgestaltung sind der jeweilige Läufer und der ihm zugeordnete Mitnehmer rechtwinklig zu der Führungsrichtung des Mitnehmers im Gehäuse relativ zueinander verschiebbar.

In einer weiteren bevorzugten Ausführungsform des Ausgleichsspannfutters weist der erste Mitnehmer einen ersten, vorzugsweise radial ausgerichteten Steg auf, der in eine erste Ausnehmung des Koppelrings eingreift, wobei der zweite Mitnehmer einen, vorzugsweise radial ausgebildeten Steg aufweist, der in eine zweite Ausnehmung des Koppelrings eingreift. In dieser alternativen Ausgestaltung weisen also nicht die Mitnehmer Ausnehmungen auf, in die sich der Koppelring hinein erstreckt, sondern weist der Koppelring entsprechende Ausnehmungen auf, in die sich Vorsprünge von Seiten der Mitnehmer aus hinein erstrecken. Das Ausgleichsfutter gemäß dieser Ausführungsform ist in gleicher Weise mit den übrigen hierin vorstehend beschriebenen bevorzugten Ausführungsformen kombinierbar, wie die Ausführungsform, nach welcher die Stege des Koppelrings in entsprechende Ausnehmungen der Mitnehmer eingreifen.

Die Erfindung wird im Folgenden anhand der bevorzugten Ausführungsbeispiele und unter Bezugnahme auf die beigefügten Figuren näher beschrieben. Hierbei zeigen:
- Figur 1: ein Ausgleichsspannfutter gemäß einem bevorzugtem Ausführungsbeispiel,
- Figuren 2 und 3: verschiedene teilmontierte Zustände des Ausgleichsspannfutters aus Figur 1, und
- Figuren 4a bis e: verschiedene schematische Teilansichten des Spannfutters gemäß dem bevorzugten Ausführungsbeispiel in unterschiedlichen Betriebszuständen.

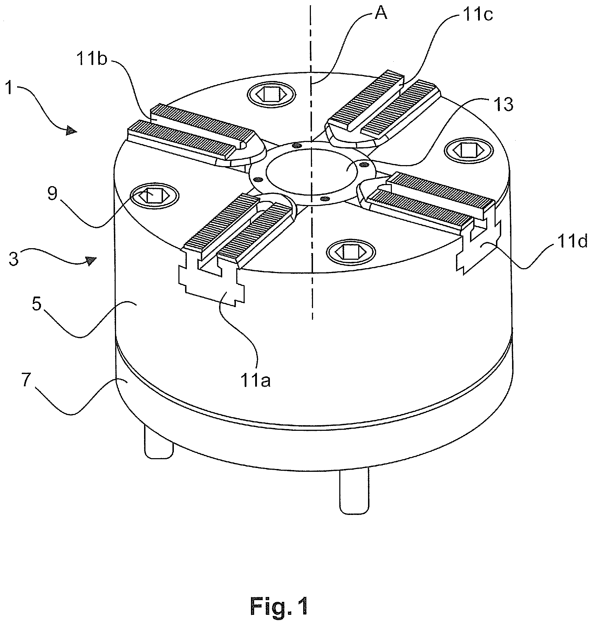

Das erfindungsgemäße Ausgleichsspannfutter 1 ist in montiertem Zustand in Figur 1 dargestellt. Das Spannfutter 1 weist ein Gehäuse 3 auf, welches unterteilt ist in einen Futterkörper 5 und eine Deckplatte 7. In dem Futterkörper sind insgesamt vier Grundbacken 11a-d linear geführt aufgenommen. Die Grundbacken 11a-d sind vorzugsweise radial geführt beweglich mit Bezug auf eine Spannachse A ausgerichtet. Das Spannfutter 1 weist ferner ein Dichtungsrohr 13 auf, welches im Wesentlichen zentral in den Futterkörper 5 eingeführt ist. Der Futterkörper 5 ist mittels mehrerer Schrauben 9 mit der Deckplatte 7 verbunden.

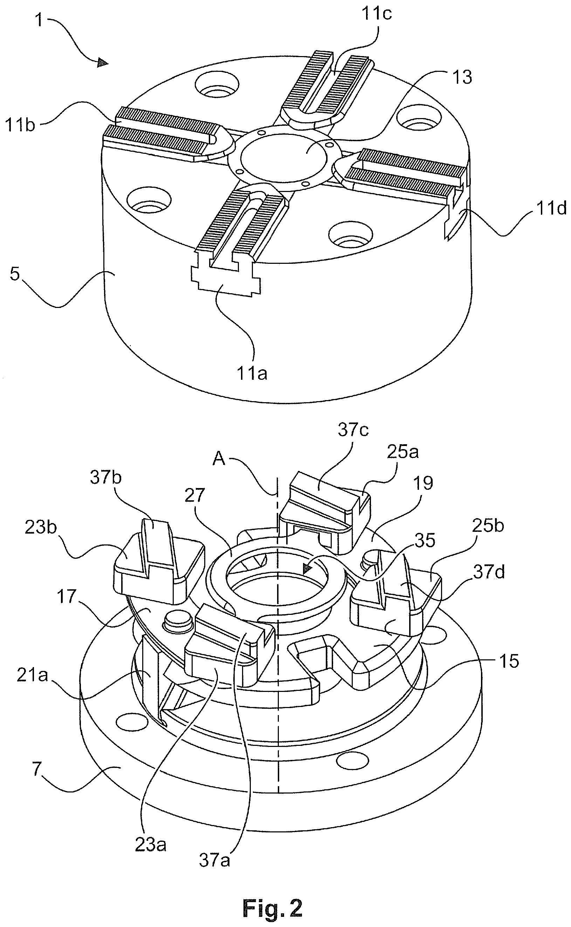

In der Darstellung gemäß Figur 2 ist der Futterkörper 5 von der Deckplatte 7 abgehoben, und mit ihm auch das Dichtungsrohr 13 und die Grundbacken 11a-d. Zum Vorschein gebracht worden sind hierdurch die Bestandteile einer Antriebseinheit 10 des Spannfutters 1. Das Spannfutter 1 weist in seinem Inneren einen Kolben 15 auf, der mit einem Zugrohr einer Kraftspanneinrichtung zum Spannen und Entspannen zusammenwirkt.

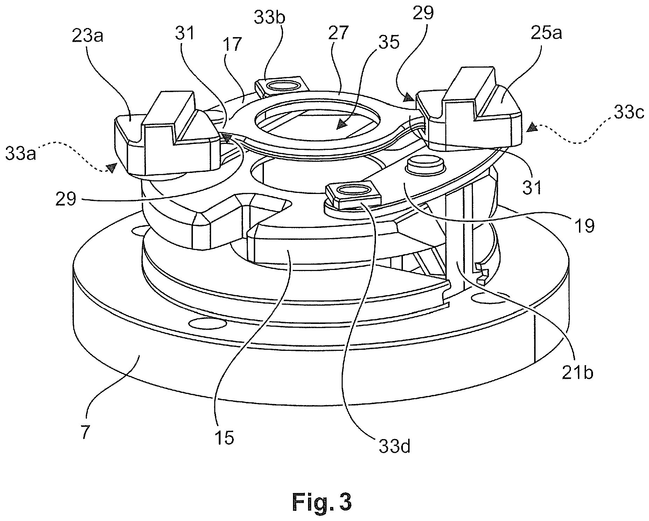

Der Kolben 15 befindet sich im Eingriff mit zwei diametral gegenüberliegend angeordneten Schiebern 21a, b (vergleiche auch Figur 3), die jeweils mit einer relativ zu der Spannachse A geneigten Gleitfläche aneinander liegen.

Auf dem ersten Schieber 21a ist eine erste Wippe 17, auch bezeichnet als Brücke, drehbar angeordnet. Auf dem zweiten Schieber 21b (vergleiche Figur 3) ist eine zweite Wippe 19 drehbar angeordnet. Die Drehachsen der ersten und zweiten Wippe 17, 19 sind insbesondere parallel zu der Spannachse A ausgerichtet.

Auf der ersten Wippe sind zwei Mitnehmer 23a, b angeordnet. Auf der zweiten Wippe 19 sind zwei Mitnehmer 25a, b angeordnet.

Das Spannfutter 1 weist einen zentral drehbar um die Spannachse A angeordneten Koppelring 27 auf, der mit einem ersten Mitnehmer 23a der ersten Wippe 17 in Wirkverbindung steht, sowie mit einem hierzu diametral gegenüberliegend angeordneten zweiten Mitnehmer 25a der Wippe 19. Der Koppelring 27 ist dazu eingerichtet, die Mitnehmer 23a, 25a in Drehrichtung zu synchronisieren, d.h. zu führen, weist aber in radialer Richtung bezogen auf die Spannachse A ein Bewegungsspiel zu den Mitnehmern 23a, 25a auf. Infolge der synchronisierten Drehbewegung um die Spannachse A herum bewegen sich auch die erste und zweite Wippe 17, 19 zwangssynchronisiert gleichsinnig.

Der erste und zweite Mitnehmer 23a, 25a weisen jeweils eine Ausnehmung 29 auf, innerhalb welcher jeweils ein Steg 31 des Koppelrings 27 verschiebbar, insbesondere gleitend, aufgenommen ist.

Die Mitnehmer 23a, b und 25a, b sind jeweils mittels eines Läufers 33a-d mit der ersten bzw. zweiten Wippe 17, 19 gekoppelt, wobei der Läufer jeweils gleitend in dem ihm jeweils zugeordneten Mitnehmer 23a,b, 25a, b gelagert ist.

Der Koppelring 27 weist eine zentrale Ausnehmung 35 auf, die sich vorzugsweise koaxial zu der Spannachse A erstreckt und zur Aufnahme des Dichtungsrohrs 13 eingerichtet ist.

Die Mitnehmer 23a, b, 25a, b weisen jeweils Vorsprünge 37a-d auf, die dazu eingerichtet sind, in korrespondierenden Kulissenführungen der Grundbacken 11a-d einzugreifen, um eine von den Mitnehmern 23a, b, 25a, b ausgeführte Schubbewegung in die radiale Bewegung der Grundbacken 11a-d umzusetzen.

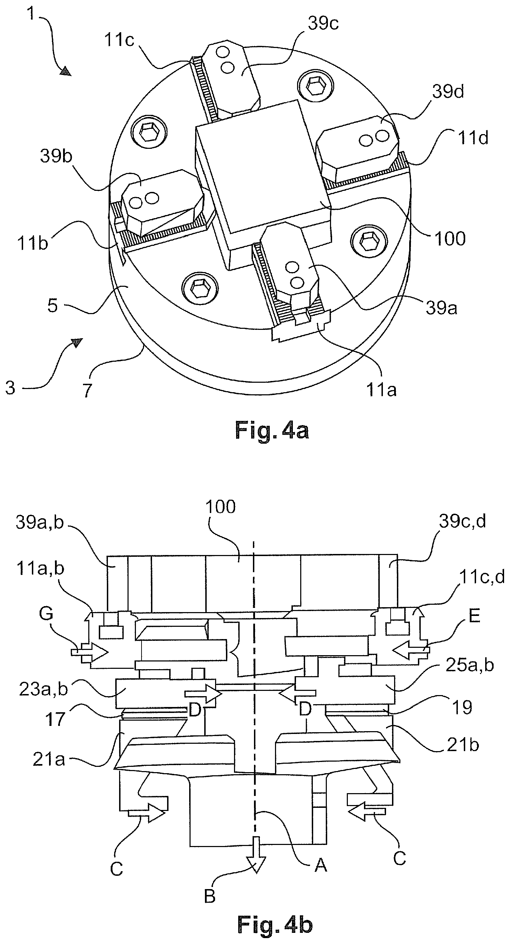

Genaueres zu den Bewegungszusammenhängen des erfindungsgemäßen Ausgleichsspannfutters nach dem bevorzugten Ausführungsbeispiel ergeben sich aus den Figuren 4a-e.

Figur 4a zeigt zunächst ein Werkstück 100, welches zwischen vier Spannbacken 39a-d mit dem Spannfutter 1 zentrisch eingespannt werden soll. Die Spannbacken 39a-d sind in allgemein bekannter Weise mit den Grundbacken 11a-d gekoppelt.

Soll ausgehend von dem in Figur 4a gezeigten Zustand ein Spannvorgang eingeleitet werden, so muss die Antriebseinheit durch Bewegen eines Zugrohrs in Richtung des Pfeils B (Figur 4b) eingeleitet werden. Der Kolben 15 wird infolge der Bewegung in Richtung des Pfeils B heruntergezogen in Richtung der Spannachse A, wodurch der erste und zweite Schieber 21a, b in Richtung der Pfeile C aufeinander zu bewegt werden. Mit den Schiebern 21a, b werden auch die Wippen 17, 19 in Richtung der Pfeile D aufeinander zu bewegt bzw. wird in die Richtung der Pfeile D eine Kraft auf die Wippen 17, 19 übertragen. Mittels der Wippen wird eine Kraft auf die Mitnehmer 23a, b, 25a, b übertragen, wodurch wiederum die Kraftübertragung in radialer Richtung auf die Spannachse A zu (Pfeile E) auf die Grundbacken 11a-d, und somit auf die Spannbacken 39a-d und das Werkstück 100 erfolgen können.

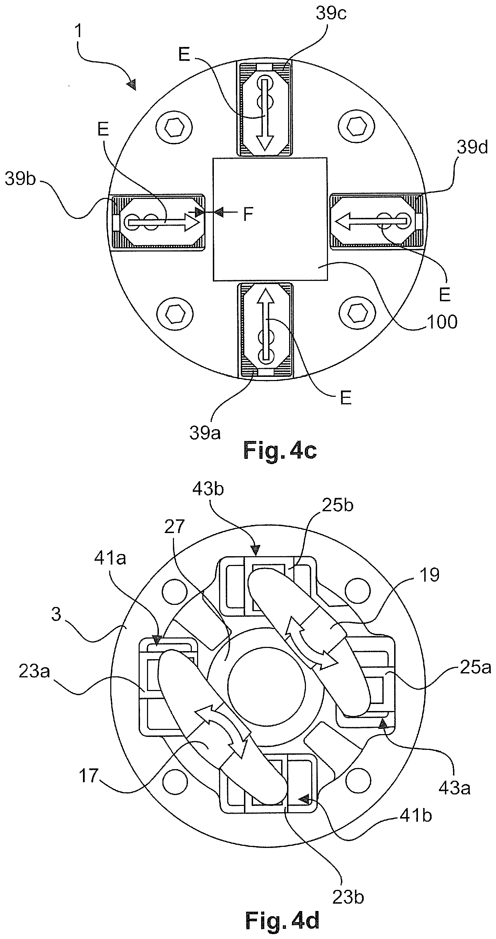

Die Spannbacken 39a-d werden infolge der Kraftübertragung solange auf das Werkstück 100 zu bewegt, bis eine oder mehrere Spannbacken das Werkstück berühren. In Figur 4c ist ein Zustand gezeigt, in dem die Spannbacken 39a, c und d am Werkstück 100 anliegen, zwischen der Spannbacke 39b und dem Werkstück 100 aber noch ein Spalt F verbleibt. Bei fortgesetzter Zugbewegung des Kolbens 15 werden, und dies ist in Figur 4d angedeutet, die erste und zweite Wippe 17, 19 verschwenkt. Der Mitnehmer 23a und Mitnehmer 23b sind zueinander rechtwinklig in dem Gehäuse 3 geführt. In der gezeigten Ausrichtung ist der Mitnehmer 23a vertikal geführt, während der Mitnehmer 23b horizontal geführt beweglich ist. Die Läufer sind jeweils rechtwinklig hierzu in einer Ausnehmung 41a,b geführt. Die Mitnehmer 23a,b werden relativ zueinander bewegt infolge der Schwenkbewegung der ersen Wippe.

Die symmetrisch gegenüberliegend angeordneten Mitnehmer 25a,b sind jeweils parallel zu den ihnen diametral gegenüberliegend angeordneten Mitnehmern der ersten Wippe im Gehäuse linear beweglich geführt. Die Mitnehmer 25a,b weisen jeweils eine zu ihrer Führung rechtwinklig angeordnete Ausnehmung zur Führung der Ausnehmung 43a,b zu Führung der ihnen zugeordneten Läufer auf. Aufgrund der Kopplung des Mitnehmers 23a mit dem Mitnehmer 25a durch den Koppelring 27 wird die zweite Wippe 19 gleichsinnig zu der ersten Wippe 17 verschwenkt.

Aufgrund der paarweisen Abhängigkeit der Mitnehmer 23a,b und 25a,b werden ausgehend von dem Zustand gemäß Figur 4c nun die beiden Spannbacken 39b,d weiter aufeinander zubewegt, weil der Spalt F noch auszugleichen ist. Die schon zuvor anliegenden Grundbacken 39a,b gewährleisten, dass das Werkstück währenddessen bezüglich einer der beiden Hauptachsen zentrisch gehalten wird, während die beiden Grundbacken 39b,d die Zentrizitäten der anderen Hauptachse herstellen. Aufgrund der leitenden Anordnung der Mitnehmer 23a,b, 25a,b relativ zu den Wippen 17, 19 und somit den Schiebern 21a,b können diese trotz des Anliegens der Grundbacken 39a,c am Werkstück 100 bei fortgesetzter Zugbewegung noch weiter aufeinander zubewegt werden.

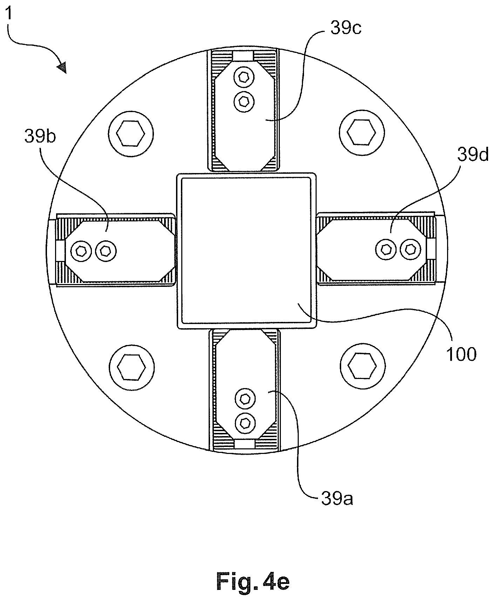

Auf diese Weise kann der Spannvorgang zentrisch fortgesetzt werden, bis sich der in Figur 4e gezeigte Endzustand einstellt, in welchem das Werkstück 100 auf allen vier Seiten zentrisch von den Spannbacken 39a-d im Spannfutter 1 gehalten wird.

Wie sich aus den vorstehenden Ausführungen anschaulich ergibt, stellt das erfindungsgemäße Ausgleichsspannfutter eine mechanisch robuste und einfach zu montierende Möglichkeit bereit, eine Ausgleichsfunktion bei Vierbacken-Spannfuttern zu realisieren.

## Patentansprüche

1. Ausgleichsspannfutter (1) zum zentrischen Einspannen von Werkstücken (100), mit
- einem Gehäuse (3),
- zwei Paaren von einander diametral gegenüberliegenden Grundbacken (11a,c; 11b,d) zur Aufnahme korrespondierender Spannbacken,
- einer, vorzugsweise mittels Kraftspannung, bewegbaren Antriebseinheit (10) mit zwei Paaren von antreibbaren Mitnehmern (23a,b; 25a,b), wobei
- zwei benachbarte Mitnehmer (23a,b) mittels einer ersten Wippe (17) miteinander gekoppelt sind, und die zwei weiteren benachbarten Mitnehmer (25a,b) mittels einer zweiten Wippe (19) miteinander gekoppelt sind,
**gekennzeichnet durch** einen Koppelring (27), der einen ersten Mitnehmer (23a) und einen diametral gegenüberliegenden zweiten Mitnehmer (25a) in Umfangsrichtung tangential bezogen auf die Spannachse (A) führt, wobei in radialer Richtung ein Bewegungsspiel zwischen den Mitnehmern (23a, 25a) und dem Koppelring (27) ausgebildet ist.

2. Ausgleichsspannfutter (1) nach Anspruch 1,
wobei der Koppelring (27) um die Spannachse (A) herum drehbar in dem Gehäuse (3) angeordnet ist.

3. Ausgleichsspannfutter (1) nach Anspruch 1 oder 2,
wobei der Koppelring (27) einen ersten vorzugsweise radial ausgerichteten Steg (31) aufweist, der in eine Ausnehmung (29) des ersten Mitnehmers (23a) eingreift, und einen zweiten vorzugsweise radial ausgerichteten Steg (31) aufweist, der in eine Ausnehmung (29) des zweiten Mitnehmers (25a) eingreift.

4. Ausgleichsspannfutter (1) nach einem der vorstehenden Ansprüche,
wobei der Koppelring (27) eine zumindest im Wesentlichen zentrale Durchgangsöffnung (35) aufweist.

5. Ausgleichsspannfutter (1) nach einem der vorstehenden Ansprüche,
wobei die erste Wippe (17) und die zweite Wippe (19) drehbar auf jeweils einem Schieber (21a,b) angeordnet sind.

6. Ausgleichsspannfutter (1) nach Anspruch 5,
wobei die Schieber (21a,b) mit einem Kolben (15) gekoppelt und synchron, insbesondere radial, aufeinander zu bzw. voneinander weg bewegbar sind.

7. Ausgleichsspannfutter (1) nach einem der vorstehenden Ansprüche,
wobei die erste und zweite Wippe (17, 19) jeweils um eine zur Spannachse (A) parallele Drehachse schwenkbar sind.

8. Ausgleichsspannfutter (1) nach einem der vorstehenden Ansprüche,
wobei die Mitnehmer (23a,b, 25a,b) jeweils linear beweglich in dem Gehäuse (3) geführt sind.

9. Ausgleichsspannfutter (1) nach Anspruch 8,
wobei jeweils einander diametral gegenüberliegende Mitnehmer (23a, 25a; 23b, 25b) zueinander parallel geführt sind.

10. Ausgleichsspannfutter (1) nach Anspruch 8 oder 9,
wobei jeweils benachbart angeordnete Mitnehmer (23a,b; 25a,b) rechtwinklig zueinander geführt sind.

11. Ausgleichsspannfutter (1) nach einem der vorstehenden Ansprüche,
wobei die Mitnehmer (23a,b; 25a,b) mit der Wippe (17, 19) jeweils mittels eines Läufers (33a-d) gekoppelt sind, welcher drehbar auf der Wippe gelagert ist.

12. Ausgleichsspannfutter (1) nach Anspruch 11,
wobei der jeweilige Läufer und der ihm zugeordnete Mitnehmer relativ zueinander linear geführt beweglich sind.

13. Ausgleichsspannfutter (1) nach Anspruch 12,
wobei der jeweilige Läufer und der ihm zugeordnete Mitnehmer rechtwinklig zu der Führungsrichtung des Mitnehmers im Gehäuse relativ zueinander verschiebbar sind.

14. Ausgleichsspannfutter nach Anspruch 1 oder 2,
wobei der erste Mitnehmer einen ersten vorzugsweise radial ausgerichteten Steg aufweist, der in eine erste Ausnehmung des Koppelrings eingreift, und wobei der zweite Mitnehmer einen vorzugsweise radial ausgebildeten Steg aufweist, der in eine zweite Ausnehmung des Koppelrings eingreift.

## Claims

1. A compensation chuck (1) for centrically clamping workpieces (100), comprising
- a housing (3),
- two pairs of mutually diametrally opposite base jaws (11a, c; 11b, d) for receiving corresponding clamping jaws,
- a drive unit (10) which is moveable, preferably by power clamping, and comprises two pairs of drivable entrainment members (23a, b; 25a, b), wherein
- two adjacent entrainment members (23a, b) are coupled together by means of a first rocker (17) and the two further adjacent entrainment members (25a, b) are coupled together by means of a second rocker (19),
**characterised by** a coupling ring (27) which guides a first entrainment member (23a) and a diametrally opposite second entrainment member (25a) in the peripheral direction tangentially relative to the clamping axis (A), wherein motion play is provided between the entrainment members (23a, 25a) and the coupling ring (27) in the radial direction.

2. A compensation chuck (1) as set forth in claim 1
wherein the coupling ring (27) is arranged in the housing (3) rotatably about the clamping axis (A).

3. A compensation chuck (1) as set forth in claim 1 or claim 2
wherein the coupling ring (27) has a first, preferably radially oriented, arm (31) engaging into an opening (29) in the first entrainment member (23a) and a second, preferably radially oriented, arm (31) engaging an opening (29) in the second entrainment member (25a).

4. A compensation chuck (1) as set forth in one of the preceding claims
wherein the coupling ring has an at least substantially central through opening (35).

5. A compensation chuck (1) as set forth in one of the preceding claims
wherein the first rocker (17) and the second rocker (19) are rotatably arranged on a respective slider (21a, b).

6. A compensation chuck (1) as set forth in claim 5 wherein the sliders (21a, b) are coupled to a piston (15) and are moveable synchronously, in particular radially, towards and away from each other.

7. A compensation chuck (1) as set forth in one of the preceding claims
wherein the first and second rockers (17, 19) are respectively pivotable about an axis of rotation parallel to the clamping axis (A).

8. A compensation chuck (1) as set forth in one of the preceding claims wherein the entrainment members (23a, b, 25a, b) are respectively guided to be linearly moveable in the housing (3).

9. A compensation chuck (1) as set forth in claim 8
wherein respective mutually diametrally opposite entrainment members (23a, 25a; 23b, 25b) are guided parallel to each other.

10. A compensation chuck (1) as set forth in claim 8 or claim 9
wherein respective adjacently arranged entrainment members (23a, b; 25a, b) are guided orthogonally with respect to each other.

11. A compensation chuck (1) as set forth in one of the preceding claims
wherein the entrainment members (23a, b; 25a, b) are respectively coupled to the rocker (17, 19) by means of a rotor (33a-d) that is mounted rotatably on the rocker.

12. A compensation chuck (1) as set forth in claim 11
wherein the respective rotor and the entrainment member associated therewith are guided to be linearly moveable relative to each other.

13. A compensation chuck (1) as set forth in claim 12
wherein the respective rotor and the entrainment member associated therewith are displaceable relative to each other orthogonally to the direction of guidance of the entrainment member in the housing.

14. A compensation chuck as set forth in claim 1 or claim 2
wherein the first entrainment member has a first, preferably radially oriented, arm engaging into a first opening in the coupling ring and wherein the second entrainment member has a, preferably radially oriented, arm engaging into a second opening in the coupling ring.

## Revendications

1. Mandrin de serrage à compensation (1) pour le serrage centré de pièces à usiner (100), avec
- un boîtier (3),
- deux paires de mâchoires de base (11a, c ; 11b, d) opposées diamétralement pour la réception de mâchoires de serrage correspondantes,
- une unité d'entraînement (10) mobile, de préférence au moyen du serrage de force, avec deux paires d'éléments d'entraînement (23a, b ; 25a, b) entraînables, dans lequel
- deux éléments d'entraînement (23a, b) contigus sont couplés entre eux au moyen d'une première bascule (17), et les deux autres éléments d'entraînement (25a, b) contigus sont couplés entre eux au moyen d'une seconde bascule (19),
**caractérisé par** une bague de couplage (27) qui mène un premier élément d'entraînement (23a) et un second élément d'entraînement (25a) opposé diamétralement dans le sens périphérique tangentiellement par rapport à l'axe de serrage (A), dans lequel un jeu de déplacement entre les éléments d'entraînement (23a, 25a) et la bague de couplage (27) est réalisé dans le sens radial.

2. Mandrin de serrage à compensation (1) selon la revendication 1,
dans lequel la bague de couplage (27) est agencée de manière à pouvoir tourner autour de l'axe de serrage (A) dans le boîtier (3).

3. Mandrin de serrage à compensation (1) selon la revendication 1 ou 2,
dans lequel la bague de couplage (27) présente une première nervure (31) orientée de préférence radialement qui vient en prise dans un évidement (29) du premier élément d'entraînement (23a), et présente une seconde nervure (31) orientée de préférence radialement qui vient en prise dans un évidement (29) du second élément d'entraînement (25a).

4. Mandrin de serrage à compensation (1) selon l'une des revendications précédentes,
dans lequel la bague de couplage (27) présente une ouverture débouchante (35) au moins sensiblement centrale.

5. Mandrin de serrage à compensation (1) selon l'une des revendications précédentes,
dans lequel la première bascule (17) et la seconde bascule (19) sont agencées de manière à pouvoir tourner sur respectivement un coulisseau (21a, b).

6. Mandrin de serrage à compensation (1) selon la revendication 5,
dans lequel les coulisseaux (21a, b) sont couplés à un piston (15) et sont mobiles de manière synchrone, en particulier radialement, l'un vers l'autre ou loin l'un de l'autre.

7. Mandrin de serrage à compensation (1) selon l'une des revendications précédentes,
dans lequel la première et la seconde bascule (17, 19) sont pivotantes respectivement autour d'un axe de rotation parallèle à l'axe de serrage (A).

8. Mandrin de serrage à compensation (1) selon l'une des revendications précédentes,
dans lequel les éléments d'entraînement (23a, b, 25a, b) sont guidés respectivement linéairement de manière mobile dans le boîtier (3).

9. Mandrin de serrage à compensation (1) selon la revendication 8,
dans lequel des éléments d'entraînement (23a, 25a ; 23b, 25b) respectivement opposés diamétralement sont guidés parallèlement les uns aux autres.

10. Mandrin de serrage à compensation (1) selon la revendication 8 ou 9,
dans lequel des éléments d'entraînement (23a, b ; 25a, b) agencés respectivement de manière contiguë sont guidés à angle droit les uns par rapport aux autres.

11. Mandrin de serrage à compensation (1) selon l'une des revendications précédentes,
dans lequel les éléments d'entraînement (23a, b ; 25a, b) sont couplés à la bascule (17, 19) respectivement au moyen d'un rotor (33a-d), lequel est logé de manière à pouvoir tourner sur la bascule.

12. Mandrin de serrage à compensation (1) selon la revendication 11,
dans lequel le rotor respectif et l'élément d'entraînement qui lui est associé sont mobiles linéairement par guidage l'un par rapport à l'autre.

13. Mandrin de serrage à compensation (1) selon la revendication 12,
dans lequel le rotor respectif et l'élément d'entraînement qui lui est associé sont mobiles l'un par rapport à l'autre à angle droit par rapport au sens de guidage de l'élément d'entraînement dans le boîtier.

14. Mandrin de serrage à compensation selon la revendication 1 ou 2,
dans lequel le premier élément d'entraînement présente une première nervure orientée de préférence radialement qui vient en prise dans un premier évidement de la bague de couplage, et dans lequel le second élément d'entraînement présente une nervure réalisée de préférence radialement qui vient en prise dans un second évidement de la bague de couplage.
